Europäisches Patentamt

European Patent Office

Office européen des brevets

(19)

(11) **EP 0 865 002 B1**

(12) **EUROPÄISCHE PATENTSCHRIFT**

(45) Veröffentlichungstag und Bekanntmachung des Hinweises auf die Patenterteilung:
**31.03.2004 Patentblatt 2004/14**

(51) Int Cl.7: **G06T 15/50**

(21) Anmeldenummer: **98250088.6**

(22) Anmeldetag: **09.03.1998**

(54) **Verfahren und Vorrichtung zur Darstellung computermodellierter Objekte**

Method and device for displaying computer modelled objects

Méthode et appareil pour afficher des objets modelisés par ordinateur

(84) Benannte Vertragsstaaten:
**DE GB**

(30) Priorität: **11.03.1997 DE 19712076**
**20.03.1997 DE 19713466**

(43) Veröffentlichungstag der Anmeldung:
**16.09.1998 Patentblatt 1998/38**

(73) Patentinhaber: **GMD - FORSCHUNGSZENTRUM INFORMATIONSTECHNIK GMBH D-53757 Sankt Augustin (DE)**

(72) Erfinder: **Ernst, Ines**
**12557 Berlin (DE)**

(74) Vertreter: **Eisenführ, Speiser & Partner**
**Patentanwälte Rechtsanwälte**
**Anna-Louisa-Karsch-Strasse 2**
**10178 Berlin (DE)**

(56) Entgegenhaltungen:
**DE-A- 19 606 356**

## Beschreibung

Die Erfindung betrifft ein Verfahren zur Darstellung eines computermodellierten Objekts gemäß dem Oberbegriff des Anspruchs 1 sowie eine Vorrichtung zur Durchführung des Verfahrens gemäß dem Oberbegriff des Anspruchs 6.

In Computer-Grafiksystemen werden Körper in der Regel durch Gittermodelle nachgebildet, die durch die Raumkoordinaten der Knotenpunkte beschrieben werden. Zur Darstellung der zwischen den Knotenpunkten liegenden Polygonflächen auf einem Bildschirm werden die Raumkoordinaten der Knotenpunkte dann aus dem 3-dimensionalen Koordinatensystem beispielsweise durch Zentralprojektion in ein 2-dimensionales Bildschirm-Koordinatensystem umgerechnet.

Der Bildeindruck der einzelnen Polygonflächen wird hierbei perspektivisch berechnet, wobei die Position und die Ausrichtung der Polygonfläche relativ zu den Lichtquellen und dem vorgegebenen Betrachterstandort berücksichtigt werden, um einen möglichst natürlichen Bildeindruck zu erreichen.

Es ist weiterhin bekannt, den Bildeindruck nicht einheitlich jeweils für die gesamte Polygonfläche zu berechnen, sondern die einzelnen Polygonflächen jeweils in eine Vielzahl von Rasterelementen aufzuteilen und den Bildeindruck individuell für jedes Rasterelement zu berechnen, so daß auch mit einem relativ groben Gittermodell mit großen Polygonflächen ein natürlicher Bildeindruck erreicht werden kann. Hierzu werden sogenannte Schattierungsverfahren angewendet, welche die Schattierung - also die Farb- bzw. Helligkeitsabstufung - innerhalb der Polygonfläche berechnen.

Ein derartiges Schattierungsverfahren ist als Phong-Schattierung bekannt. Hierbei wird für jede Polygonfläche ein Datensatz vorgegeben, aus dem die lokale Flächennormale an den Eckpunkten der Polygonfläche hervorgeht, so daß auch gekrümmte Polygonflächen realisierbar sind, was den Realitätsgrad der Bilddarstellung weiter verbessert. Für jedes Rasterelement innerhalb der Polygonfläche wird dann aus den vorgegebenen Eckpunktnormalen die lokale Flächennormale interpoliert, die sich aus der Krümmung der Polygonfläche ergibt. Die Berechnung des Bildeindrucks der einzelnen Rasterelemente erfolgt dann unter Berücksichtigung der lokalen Flächennormale entsprechend einem lokalen Beleuchtungsmodell.

Die vorstehend beschriebene Phong-Schattierung ermöglicht zwar durch die Berücksichtigung der Krümmung der einzelnen Polygonflächen vorteilhaft einen sehr natürlichen Bildeindruck, jedoch ist die Berechnung sehr aufwendig, da das lokale Beleuchtungsmodell für jedes Rasterelement berechnet werden muß.

Ein Vorteil der Phong-Schattierung ist jedoch in der Möglichkeit zu sehen, eine Oberflächenstruktur der einzelnen Polygonflächen zu simulieren, ohne das Gittermodell entsprechend verfeinern zu müssen. So ist es bei der Darstellung einer Holzoberfläche beispielsweise möglich, die Holzmaserung zu simulieren. Hierzu ist eine zweidimensionale Speichermatrix (engl. Bump Map) vorgesehen, welche die gewünschte Oberflächenstruktur definiert und in jedem Speicherplatz einen Neigungswert enthält, der angibt, wie die lokale Flächennormale aufgrund der Oberflächenstruktur geneigt ist, wobei jedes Rasterelement der Polygonfläche einem Speicherplatz der Speichermatrix zugeordnet ist. Bei der Berechnung des Bildeindrucks der einzelnen Rasterelemente wird also zunächst der zugehörige Speicherplatz der Speichermatrix bestimmt und der Neigungswert ausgelesen, der die Oberflächenstruktur wiedergibt. Bei der Berechnung des Bildeindrucks entsprechend dem lokalen Beleuchtungsmodell wird dann nicht die interpolierte lokale Flächennormale der glatten Polygonfläche berücksichtigt, sondern die entsprechend dem Neigungswert veränderte lokale Flächennormale. Hierbei wird die Tatsache ausgenutzt, daß für den Bildeindruck eines Rasterelements einer tiefenstrukturierten Oberfläche nicht die Position des Rasterelements entscheidend ist, sondern die durch die Oberflächenstruktur verursachte Änderung der lokalen Flächennormale.

Die vorstehend beschriebene Simulation einer Oberflächenstruktur setzt grundsätzlich jedoch ein Schattierungsverfahren voraus, das die lokale Flächennormale individuell für jedes Rasterelement interpoliert und den Bildeindruck entsprechend einem lokalen Beleuchtungsmodell für jedes Rasterelement berechnet, da die Neigung der lokalen Flächennormale nur bei der Berechnung des lokalen Beleuchtungsmodells berücksichtigt werden kann. Das sogenannte Bump-Mapping ist also bisher nur in Verbindung mit relativ aufwendigen Schattierungsverfahren möglich.

Ein wesentlich einfacheres Schattierungsverfahren ist als Gouraud-Schattierung bekannt. Hierbei wird für jede Polygonfläche ebenfalls ein Datensatz vorgegeben, aus dem die räumliche Lage der lokalen Flächennormalen an den Eckpunkten der Polygonfläche hervorgeht. Im Gegensatz zu der vorstehend beschriebenen Phong-Schattierung erfolgt die Berechnung des lokalen Beleuchtungsmodells hierbei jedoch nur für die Eckpunkte der Polygonfläche, wohingegen der Bildeindruck der innerhalb der Polygonfläche liegenden Rasterelemente in Abhängigkeit von der Position des jeweiligen Rasterelements innerhalb der Polygonfläche aus dem Bildeindruck an den Eckpunkten der Polygonfläche interpoliert wird.

Einerseits wird hierdurch gegenüber der Phong-Schattierung Rechenzeit gespart, da die aufwendige Berechnung des lokalen Beleuchtungsmodells nur an den Eckpunkten der Polygonfläche erfolgt, während die Interpolation des Bildeindrucks für die einzelnen Rasterelemente bezüglich des Rechenaufwands wesentlich einfacher ist.

Andererseits ist der Bildeindruck bei der Gouraud-Schattierung weniger natürlich als bei der aufwendigeren Phong-Schattierung und die Simulation einer Oberflächenstruktur (Bump-Mapping) ist in der vorstehend beschriebenen Weise nicht möglich.

Die deutsche Patentanmeldung DE 196 06 356 beschreibt ein Bildverarbeitungsverfahren zur Simulation einer Tiefenstruktur und ein zugehörige Vorrichtung.

Der Erfindung liegt die Aufgabe zugrunde, ein Verfahren zur Darstellung computermodellierter Objekte zu schaffen, das bei möglichst geringem Rechenaufwand auch die Simulation einer Oberflächenstruktur ermöglicht, ohne das Gittermodell entsprechend verfeinern zu müssen. Weiterhin liegt der Erfindung die Aufgabe zugrunde, eine entsprechende Vorrichtung zur Durchführung eines derartigen Verfahrens zu schaffen.

Die Aufgabe wird, ausgehend von einem Verfahren gemäß dem Oberbegriff des Anspruchs 1, durch die im kennzeichnenden Teil des Anspruchs 1 angegebenen Merkmale bzw. - hinsichtlich der Vorrichtung zur Durchführung des Verfahrens - durch die Merkmale des Anspruchs 6 gelöst.

Die Erfindung schließt die technische Lehre ein, bei einem Verfahren zur Darstellung computermodellierter Objekte die an sich bekannten Techniken der Gouraud-Schattierung und des sogenannten Bump-Mapping miteinander zu kombinieren.

Die erfinderischen Maßnahmen lassen sich sowohl mit rein softwaremäßigen Maßnahmen als auch mittels geeigneter spezieller Hardware ausführen. Die hardwaremäßige Lösung hat dabei den Vorteil, daß sich insbesondere durch in parallel angeordneten Baugruppen gleichzeitig ausgeführte Operationen große Zeitvorteile erzielen lassen.

Wenn daher nachfolgend von "Baugruppen" die Rede ist, kann es sich dabei auch um Funktionsgruppen, beispielsweise in Form von elektrischen Schaltungen, handeln. Hierbei ist auch eingeschlossen, daß ein und dieselbe Bau- oder Funktionsgruppe nacheinander unterschiedliche Operationen ausführt, wie es bei der Prozessortechnik allgemein der Fall ist. Geschwindigkeitsvorteile lassen sich aber - wie erläutert - vor allen Dingen dann erzielen, wenn Funktionsgruppen parallel nebeneinander tätig sind.

Die Berechnung des Bildeindrucks erfolgt gemäß der Erfindung durch eine Recheneinheit, die Bestandteil eines übergeordneten Grafiksystems ist und von diesem sämtliche Daten erhält, die zur Berechnung des Bildeindrucks jeweils einer Polygonfläche erforderlich sind.

So erhält die erfindungsgemäße Recheneinheit von dem übergeordneten Grafiksystem einen ersten Parametersatz, der die räumliche Lage der darzustellenden Polygonfläche wiedergibt. Der erste Parametersatz enthält hierzu beispielsweise die Raumkoordinatenwerte der Eckpunkte des darzustellenden Polygons oder die Raumkoordinatenwerte des Flächenschwerpunkts sowie die Komponenten des Normalenvektors der Polygonfläche. Maßgebend für die Zusammensetzung des ersten Parametersatzes ist jedoch lediglich, daß dieser die räumliche Lage der Polygonfläche eindeutig wiedergibt.

Weiterhin erhält die Recheneinheit einen zweiten Parametersatz, der die Perspektive des Betrachters bestimmt und beispielsweise die Raumkoordinaten des Betrachterstandorts oder die Blickrichtung definiert. Durch eine Änderung dieses zweiten Parametersatzes ist es in einfacher Weise möglich, die Perspektive des Betrachters auf die darzustellenden Objekte zu ändern und so beispielsweise durch eine räumliche Szene "hindurchzuwandern".

Darüber hinaus nimmt die Recheneinheit von dem übergeordneten Grafiksystem einen Beleuchtungsdatensatz auf, der die optischen Eigenschaften der Beleuchtung definiert. Vorzugsweise enthält der Beleuchtungsdatensatz die Raumkoordinaten der Lichtquellen sowie deren Abstrahleigenschaften.

Aus diesen Daten bestimmt die Recheneinheit dann mittels einer ersten Baugruppe mindestens eine Flächennormale für die jeweilige Polygonfläche, um nachfolgend den Bildeindruck entsprechend einem lokalen Beleuchtungsmodell berechnen zu können. Vorzugsweise berechnet die erste Baugruppe aus dem ersten Parametersatz die lokalen Flächennormalen an sämtlichen Eckpunkten der jeweiligen Polygonfläche.

Anschließend berechnet dann eine zweite Baugruppe der Recheneinheit (engl. Shader) aus dem Beleuchtungsdatensatz, dem ersten Parametersatz und den lokalen Flächennormalen entsprechend einem lokalen Beleuchtungsmodell einen Farbwert, der den Bildeindruck wiedergibt. Vorzugsweise wird das lokale Beleuchtungsmodell für die Eckpunkte der Polygonfläche durchgerechnet, um nachfolgend eine zweidimensionale Interpolation der Farbwerte innerhalb der Polygonfläche durchführen zu können. Der Begriff Farbwert ist hierbei und im folgenden allgemein zu verstehen und nicht auf Chrominanzwerte im engeren Sinne beschränkt, sondern umfaßt bei einer monochromen Darstellung auch reine Luminanzwerte.

Zur Interpolation der Farbwerte entsprechend der Gouraud-Schattierung wird die Polygonfläche mittels einer dritten Baugruppe in eine Vielzahl von Rasterelemente aufgeteilt, wobei für jedes Rasterelement ein Koordinatensatz berechnet wird, der die Position des Rasterelements innerhalb der Polygonfläche angibt.

Die eigentliche Interpolation für die Gouraud-Schattierung erfolgt dann individuell für jedes Rasterelement durch eine vierte Baugruppe in Abhängigkeit von der Position des jeweiligen Rasterelements innerhalb der Polygonfläche. Auf diese Weise wird für jedes Rasterelement ein erster lokaler Farbwert berechnet, der jedoch noch keine Oberflächenstruktur berücksichtigt.

Zur Definition einer Oberflächenstruktur weist die erfindungsgemäße Recheneinheit eine zwei-dimensionale Speichermatrix auf, die in jedem Speicherplatz einen Neigungswert enthält, der die Neigung der lokalen Flächennormale bestimmt, die sich aus der gewünschten Oberflächenstruktur ergibt. Eine vorgegebene Mapping-Funktion beschreibt eine feste Abbildung der Polygoneckpunkte auf die Speichermatrix-Adressen. Jedem Rasterelement der Polygonfläche wird damit in Abhängigkeit von der Position des Rasterelements innerhalb der Polygonfläche ein Speicherplatz der Speichermatrix zugeordnet, dessen Inhalt dann die Neigung der lokalen Flächennormale in diesem Rasterelement bestimmt.

Als Neigungswert kann beispielsweise der Neigungsvektor abgespeichert sein, also der Vektor, der zu der lokalen Flächennormale der glatten Oberfläche addiert werden muß, um den Eindruck der Tiefenstruktur hervorzurufen, oder auch eine "Ersatz"-Flächennormale als solche. Wird diese bereits normiert abgespeichert, vereinfachen sich spätere Winkelberechnungen zur Bestimmung der Beleuchtungsanteile erheblich. Auch ist es möglich, als Neigungswert eine Rotationsmatrix abzuspeichern, die die Drehung der lokalen Flächennormale definiert. Dies ist besonders vorteilhaft, da durch eine Drehung die Länge der lokalen Flächennormale nicht verändert wird.

Vorzugsweise wird in der Speichermatrix nicht die Tiefenstruktur selbst als Relief abgespeichert, sondern die sich aus dem Oberflächenverlauf ergebende Neigung der lokalen Flächennormale. Die Berechnung der aufgrund der Tiefenstruktur geneigten lokalen Flächennormale kann deshalb vorteilhaft relativ schnell und mit geringem Rechenaufwand erfolgen.

Entscheidend ist in diesem Zusammenhang, daß der Tiefenwert ausschließlich von der Position des Rasterelements innerhalb der Polygonfläche abhängt, nicht jedoch von der globalen Position des Rasterelements oder der räumlichen Lage der Polygonfläche. Dies ist notwendig, da andernfalls die auf der Polygonoberfläche erscheinende Tiefenstruktur bei einer Bewegung des Polygons auf der Oberfläche "wandern" würde. Die Adressierung der Speichermatrix erfolgt deshalb individuell für jedes Rasterelement in Abhängigkeit von dem jeweiligen Koordinatensatz, wobei die Adressierungseinheit sicherstellt, daß die Zuordnung der einzelnen Rasterelemente zu den Speicherplätzen der Speichermatrix unabhängig von einer eventuellen Positionsänderung der Polygonfläche ist.

Die eigentliche Berücksichtigung der durch die Speichermatrix definierten Oberflächenstruktur erfolgt dann durch eine fünfte Baugruppe der Recheneinheit, die den Neigungswert des jeweiligen Rasterelements aus der Speichermatrix ausliest und in Verbindung mit einem die Beleuchtungssituation widerspiegelnden Vektor, der die Information über die Beziehung zwischen Augpunkt und Lichtquelle enthält, einen zweiten lokalen Farbwert berechnet, der die Oberflächenstruktur berücksichtigt.

Der die Beleuchtungssituation widerspiegelnde Vektor - etwa der sogenannte Halbvektor - muß als zusätzliche Information zur Verfügung stehen (in der beschriebenen Version lx je Polygon), vorberechnet, in das Bump-Koordinatensystem transformiert sein und übergeben werden. Bei der Berechnung des Beleuchtungsmodells an den Polygonecken für die Gouraud-Schattierung wird ein solcher Vektor bereits benötigt und berechnet; bei Verwendung einer anderen Beleuchtungsgleichung ist ein adäquater Vektor erforderlich.

Mit der Transformation des Halbvektors in das Bump-Koordinatensystem wird die Lage des Polygons im Raum "versteckt", und der transformierte Halbvektor enthält die gesamte Information zur Ausführung eines "bump-mapping".

Diese Vorgehensweise umgeht eine aufwendige Transformation jedes einzelnen Speichermatrixelements ins Beleuchtungskoordinatensystem, nach Ausführung nur einer Transformation je Polygon kann der lokale zweite Farbwert im Bump-Koordinatensystem berechnet werden. Die Beleuchtung werde in einem bestimmten Koordinatensystem, bezeichnet als Weltsystem (WC), berechnet. Das zu betrachtende Objekt werde in einem geeigneten Modell-Koordinatensystem (MC) beschrieben. Das Koordinatensystem der Einträge der Speichermatrix sei bezeichnet als Texture Bump-System (TB). Eine Matrix M (mapping matrix) beschreibt die Abbildung eines Vektors $\nu$ des TB nach MC (gegeben bzw. zu ermitteln aus der Zuordnung Objektpunkte $\Leftrightarrow$ Bump-Adressen). Eine Matrix P (model matrix) beschreibt die Abbildung eines Vektors $\nu$ des MC nach WC. Der Halbvektor sei H.

Dann gilt:

$$\nu_{WC} = P * \nu_{MC}$$

$$\nu_{MC} = M * \nu_{TB}$$

$$\nu_{WC} = P * M * \nu_{TB} = A * \nu_{TB}$$

und damit:

$$H_{TB} = A^{-1} * H_{WC} \; ; \; H_{TBN} = H_{TB}/\|H_{TB}\|$$

Die Berechnung des endgültigen lokalen Farbwerts für die nachfolgende Ansteuerung eines Bildschirms oder einer anderen Ausgabeeinheit erfolgt dann durch Mischung des ersten und des zweiten lokalen Farbwerts mittels einer sechsten Baugruppe.

Die Erfindung ermöglicht also erstmals die Simulation einer Oberflächenstruktur in Verbindung mit einem einfachen Schattierungs-Algorithmus vom Goraud-Typ, so daß auch bei schnellen Bewegtbilddarstellungen aufgrund der Ersparnis an Rechenzeit eine Oberflächenstruktur darstellbar ist.

In einer vorteilhaften Variante der Erfindung von eigener schutzwürdiger Bedeutung enthält die Speichermatrix direkt die lokale Flächennormale in dem jeweiligen Rasterelement. Im Gegensatz zu den herkömmlichen Verfahren des Bump-Mapping ist hierbei also keine rechenaufwendige Interpolation der lokalen Flächennormale während der Darstellung erforderlich, da die Speichermatrix (Bump-Map) direkt die lokale Flächennormale enthält. Zur Bestimmung der lokalen Flächennormale in dem jeweiligen Rasterelement ist es also lediglich erforderlich, aus dem Koordinatensatz des Rasterelements den zugehörigen Speicherplatz der Speichermatrix zu bestimmen und die Speichermatrix entsprechend zu adressieren, so daß die lokale Flächennormale ausgelesen werden kann.

In einer Ausführungsform dieser Variante erfolgt die Berechnung der lokalen Farbwerte für die einzelnen Rasterelemente dann entsprechend dem bereits eingangs beschriebenen Phong'schen Schattierungsverfahren, was wegen der schnellen Berechnung der lokalen Flächennormale ohne eine zeitaufwendige Interpolation aus den Eckpunktnormalen in vertretbarer Rechenzeit möglich ist.

In einer anderen Ausführungsform dieser Variante erfolgt die Berechnung der lokalen Farbwerte für die einzelnen Rasterelemente dagegen zunächst - wie bereits vorstehend beschrieben - entsprechend dem Gouraud-Schattierungsverfahren durch Interpolation der für die Eckpunkte aus dem lokalen Beleuchtungsmodell berechneten Farbwerte, während die aus der Speichermatrix ausgelesenen lokalen Flächennormalen lediglich zur nachträglichen Hinzufügung von Phong'schen Beleuchtungsanteilen dienen.

Gemäß einer weiteren Ausführungsform dieser Variante dient die aus der Speichermatrix ausgelesene lokale Flächennormale dagegen zur Adressierung einer weiteren Speichermatrix (engl. Reflection Map), die eine Hüllfläche um das jeweilige Rasterelement nachbildet. Derartige Reflection Maps sind dem Fachmann bekannt, wobei die Adressierung der Reflection Map bei Annahme spekularer Reflexion durch den reflektierten Augvektor erfolgt, wohingegen bei diffuser Reflexion die lokale Flächennormale die Reflection- bzw. Environment-Map direkt adressiert.

Darüber hinaus bietet die vorstehend beschriebene schnelle Bestimmung der lokalen Flächennormale auch die Möglichkeit einer Anwendung von Raytracing-Verfahren.

Der Körper bzw. die Fläche, die auf dem Bildschirm dargestellt werden soll, wird - wie bereits vorstehend beschrieben - im Computer als Gittermodell nachgebildet. Die Oberfläche besteht deshalb aus zahlreichen Polygonflächen, deren räumliche Lage durch die Raumkoordinaten der Knotenpunkte des Gittermodells definiert ist. Vorzugsweise werden als Polygonflächen Dreiecke verwendet, was den Vorteil bietet, daß die Flächennormale eines Dreiecks durch die Raumkoordinaten der Eckpunkte eindeutig definiert ist, da drei Punkte immer in einer Ebene liegen, während bei Polygonen mit mehr als drei Eckpunkten die Möglichkeit besteht, daß die Eckpunkte nicht exakt in einer Ebene liegen, so daß auch die Flächennormale nicht exakt definiert ist.

Das vorstehend beschriebene Verfahren ist nicht beschränkt auf eine monochrome Darstellung. Vielmehr kann das Verfahren nacheinander oder parallel für mehrere Farben - vorzugsweise die Grundfarben - durchgeführt werden. Hierbei kann auch ein farbabhängiges Reflexions- oder Absorptionsverhalten der Oberfläche berücksichtigt werden.

In einer vorteilhaften Variante der Erfindung ist die Vorrichtung als integrierte Schaltung in einem Prozessorsystem oder auch als selbständiger Prozessor ausgeführt, die an ihrem Eingang einen Parametersatz aufnimmt, der unter anderem die räumliche Lage einer Polygonfläche bestimmt. Am Ausgang werden dann die Bildschirmkoordinaten einzelner Rasterelemente der Polygonfläche sowie der Helligkeitswert der Rasterelemente ausgegeben. Die Schaltung läßt sich somit günstig in bestehende Computer-Grafiksysteme einbinden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1        als bevorzugtes Ausführungsbeispiel der Erfindung eine Recheneinheit zur Darstellung von computermodellierten Objekten als Bestandteil eines umfassenden Computer-Grafiksystems,

Figur 2a, 2b      ein Schema zur Erläuterung der Aufteilung der Polygonflächen in Rasterelemente,

Figur 3        eine schematische Darstellung der Beleuchtungssituation zur Veranschaulichung des lokalen Beleuchtungsmodells sowie

Figur 4        ein Schema zur Verdeutlichung der Aufprägung eines Vektorfeldes und einer Textur auf eine Polygonfläche.

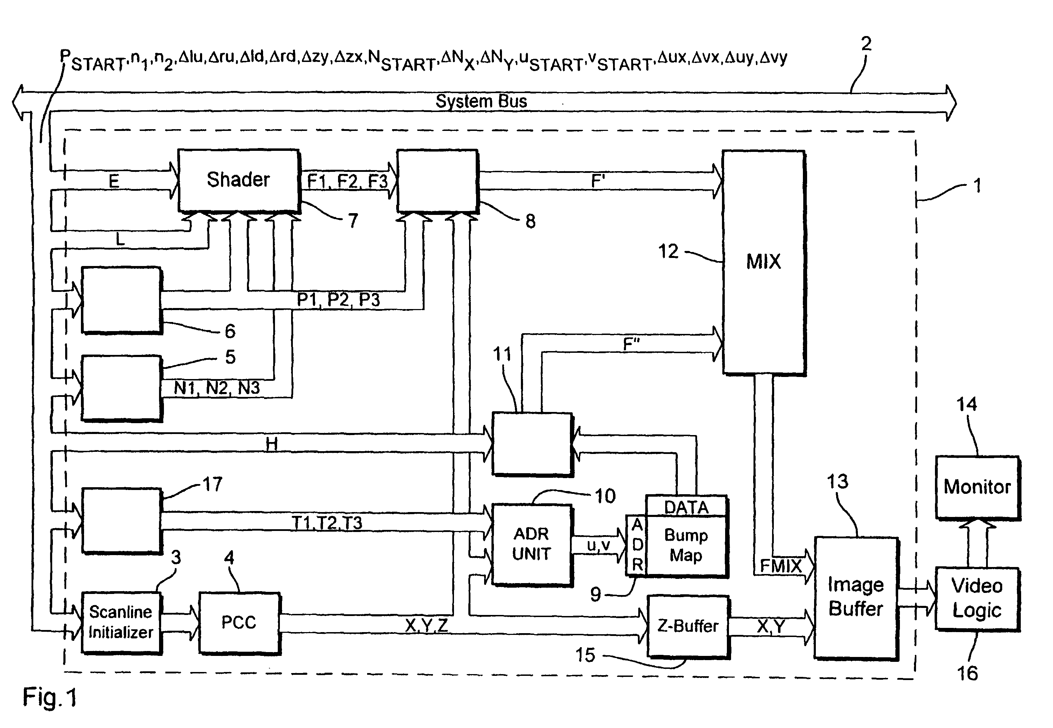

Figur 1 zeigt eine Recheneinheit 1, die eine Darstellung von computer-modellierten Objekten ermöglicht und Bestandteil eines umfassenden Computer-Grafiksystems ist, von dem hier lediglich ein Systembus 2 dargestellt ist. Die einzelnen Objekte sind hierbei in dem Grafiksystem als Gittermodell gespeichert und durch die Raumkoordinaten der Knotenpunkte des Gittermodells sowie durch die optischen Eigenschaften der zwischen den Knotenpunkten liegenden dreieckigen Polygonflächen - beispielsweise die Farbe und die Reflexionseigenschaften - definiert.

Die dargestellte Recheneinheit 1 berechnet nacheinander den Bildeindruck sämtlicher Polygonflächen der einzelnen Objekte, wobei die räumliche Lage der jeweiligen Polygonfläche, die gewünschte Perspektive sowie die Beleuchtungssituation von dem Grafiksystem über den Systembus 2 vorgegeben werden. Die Recheneinheit 1 erhält hierzu von dem Grafiksystem über den Systembus 2 für jede darzustellende Polygonfläche einen Parametersatz, der die räumliche Lage sowie die optischen Eigenschaften der jeweiligen Polygonfläche wiedergibt und eine Feinaufteilung der Polygonfläche in eine Vielzahl von Rasterelementen ermöglicht, die jeweils in Rasterzeilen angeordnet sind. So enthält der Parametersatz die Raumkoordinaten $(x_s, y_s, z_s)$ eines Eckpunkts $P_{Start}$ des Dreiecks, die Kanteninkremente $\Delta lu$, $\Delta ru$, $\Delta ld$, $\Delta rd$, die Anzahl der Rasterzeilen $n_1$, $n_2$ des Dreiecks, sowie die Neigung $\Delta zx$ der Dreiecksfläche zur X-Achse und die Neigung $\Delta zy$ der Dreiecksfläche zur Y-Achse. Darüber hinaus enthält der Parametersatz die Koordinaten der lokalen Flächennormale $\mathbf{N}_{Start}$ in dem vorgegeben Eckpunkt sowie die Vektorinkremente $\Delta\mathbf{N}_x$, $\Delta\mathbf{N}_y$, die eine Berechnung der lokalen Flächennormale in jedem Rasterelement der Dreiecksfläche ermöglichen. Die Dreiecksfläche ist also nicht notwendigerweise eben, sondern in der Regel gekrümmt, und ihre Krümmung wird - nur für die Beleuchtung - durch eine Flächennormaleninterpolation simuliert. Zum einen ermöglicht dies eine Anpassung der Krümmung an einen vorgegebenen Oberfächenverlauf der Objekte. Zum anderen ist es auf diese Weise möglich, an den Kanten zwischen benachbarten Dreiecksflächen einen knickfreien und damit optisch unauffälligen Übergang zu erreichen. Der Parametersatz enthält ferner die Bumptextur-Koordinaten $u_{Start}$, $v_{Start}$ sowie die zugehörigen Inkremente $du_x$, $dv_x$, $du_y$, $dv_y$, die eine Berechnung der lokalen Speichermatrixadresse in jedem Rasterelement der Dreiecksfläche ermöglichen. Weiterhin enthält der Parametersatz Informationen über die Farbe der Dreiecksoberfläche, das Absorptionsverhalten, die Durchsichtigkeit der Dreiecksfläche und ähnliches.

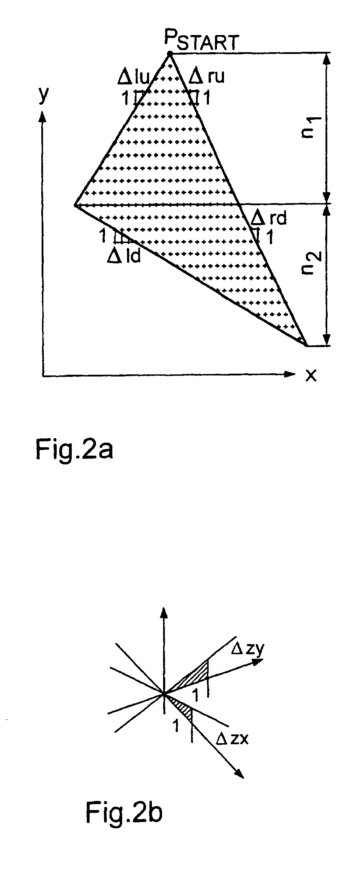

Der von dem übergeordneten Grafiksystem gelieferte Parametersatz wird in der Recheneinheit 1 unter anderem einer Baugruppe 3 (engl. Scanline Initializer) zugeführt, die die Dreiecksfläche zunächst in eine Vielzahl von Rasterzeilen aufteilt und für jede Rasterzeile die Raumkoordinaten des Anfangspunkts $(x_1, y_1, z_1)$ und des Endpunkts $(x_r, y_r, z_r)$ berechnet. Die Figuren 2a und 2b zeigen eine derartige Dreiecksfläche zur Veranschaulichung der Aufteilung in Rasterelemente. Die einzelnen Rasterzeilen liegen jeweils parallel zur X-Achse und äquidistant zueinander, so daß sich die Y-Koordinate sämtlicher Rasterelemente einer Rasterzeile aus der Y-Koordinate $y_s$ des vorgegebenen Eckpunkts $P_{Start}$ und der Nummer $i$ der Rasterzeile ergibt. Für die Y-Koordinaten von Anfangspunkt und Endpunkt der einzelnen Rasterzeilen gilt also:

$$y_1 = y_S + i \qquad y_r = y_S + i$$

Die X-Koordinate $x_1$ des Anfangspunkts jeder Rasterzeile ergibt sich entsprechend aus der X-Koordinate $x_S$ des vorgegebenen Startpunkts $P_{start}$, der Nummer $i$ der Rasterzeile sowie dem Kanteninkrement $\Delta lu$ bzw. $\Delta ld$. Innerhalb der ersten $n_1$ Rasterzeilen wird hierbei das Kanteninkrement $\Delta lu$ und anschließend das Kanteninkrement $\Delta ld$ verwendet.

$$x_1 = x_S + \Delta lu \cdot i \qquad \text{für } i \leq n_1$$

$$x_1 = x_S + \Delta lu \cdot n_1 + (i - n_1) \cdot \Delta ld \qquad \text{für } n_1 < i \leq n_1 + n_2$$

In gleicher Weise ergibt sich die X-Koordinate $x_r$ des Endpunkts jeder Rasterzeile aus der X-Koordinate $x_S$ des Startpunkts $P_{start}$, der Nummer $i$ der Rasterzeile sowie dem Kanteninkrement $\Delta ru$ bzw. $\Delta rd$. Hierbei wird während der ersten $n_1$ Rasterzeilen das Kanteninkrement $\Delta ru$ und anschließend das Kanteninkrement $\Delta rd$ verwendet:

$$x_r = x_S + \Delta ru \cdot i \qquad \text{für } i \leq n_1$$

$$x_r = x_S + \Delta ru \cdot n_1 + (i - n_1) \cdot \Delta rd \qquad \text{für } n_1 < i \leq n_1 + n_2$$

Die Z-Koordinate $z_1$ des Anfangspunkts jeder Rasterzeile ergibt sich aus der Z-Koordinate $z_S$ des Startpunkts $P_{Start}$, der Nummer $i$ der Rasterzeile sowie den vorgegebenen Neigungen der Dreiecksfläche zur X-Achse und zur Y-Achse:

$$z_1 = z_S - i \cdot \Delta zy + (x_1 - x_S) \cdot \Delta zx$$

Die Baugruppe 3 gibt dann den vorgegebenen Neigungswert $\Delta zy$ der Dreiecksfläche sowie die Koordinaten von Anfangspunkt $(x_1, y_1, z_1)$ und Endpunkt $(x_r, y_r, z_r)$ jeweils einer Rasterzeile an eine nachgeschaltete Baugruppe 4 (engl. PCC - Pixel Coordinate Calculator), die die einzelnen Rasterzeilen in eine Vielzahl von Rasterelementen aufteilt und deren Koordinaten berechnet. Da die Rasterzeilen parallel zur X-Achse verlaufen, ist die Y-Koordinate jedes Rasterelements gleich der Y-Koordinate der zugehörigen Rasterzeile:

$$y_j = y_1$$

Die X-Koordinate jedes Rasterelements ergibt sich aus der X-Koordinate $x_1$ des Anfangspunkts der Rasterzeile, und der Nummer $j$ des Rasterelements in der Rasterzeile:

$$x_j = x_1 + j$$

Die Z-Koordinate eines Rasterelements läßt sich in einfacher Weise aus der Z-Koordinate $z_1$ des Anfangspunkts der zugehörigen Rasterzeile, der Nummer $j$ des Rasterelements innerhalb der Rasterzeile und der Neigung $\Delta zx$ der Dreiecksfläche relativ zur X-Achse berechnen:

$$z_j = z_1 + j \cdot \Delta zy$$

Die Baugruppe 4 berechnet also für jedes Rasterelement der Polygonfläche die Koordinaten X, Y, Z, was Voraussetzung für eine spätere Interpolation der Farbwerte sowie der Speichermatrixadressen innerhalb der Polygonfläche ist.

Der von dem übergeordneten Grafiksystem gelieferte Parametersatz wird darüber hinaus einer weiteren Baugruppe 5 der Recheneinheit 1 zugeführt, welche die lokalen Flächennormalen **N**1, **N**2, **N**3 an den Eckpunkten P1, P2, P3 der dreieckigen Polygonfläche berechnet, um nachfolgend den Farbwert F1, F2 bzw. F3 an den Eckpunkten entsprechend einem lokalen Beleuchtungsmodell berechnen zu können.

Darüber hinaus wird der von dem übergeordneten Grafiksystem gelieferte Parametersatz einer weiteren Baugruppe 6 zugeführt, die die Koordinaten der drei Eckpunkte P1, P2, P3 der dreieckigen Polygonfläche berechnet.

Die von der Baugruppe 6 berechneten Koordinaten der Eckpunkte P1, P2, P3 sowie die von der Baugruppe 5 ermittelten Komponenten des Normalenvektors **N**1, **N**2 bzw. **N**3 an den Eckpunkten P1, P2 bzw. P3 werden dann einer weiteren Baugruppe 7 zugeführt, die den Bildeindruck an den drei Eckpunkten entsprechend einem lokalen Beleuchtungsmodell berechnet. Neben der Information über die räumliche Position und die Flächennormale in den Eckpunkten benötigt die Baugruppe 7 hierzu Informationen über die Beleuchtungssituation sowie über die gewünschte Perspektive. Das übergeordnete Grafiksystem liefert hierzu über den Systembus 2 einen Parametersatz E, der die Position eines virtuellen Betrachters und damit die Perspektive bestimmt. Darüber hinaus erhält die Baugruppe 7 für jede Lichtquelle einen Beleuchtungsdatensatz L, der die Position, die Hauptabstrahlrichtung und die Intensität der Lichtquelle wiedergibt.

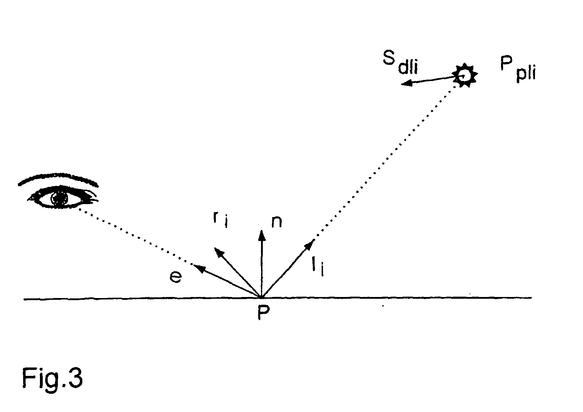

Die Berechnung des Bildeindrucks am jeweiligen Eckpunkt erfolgt dann getrennt für die drei Grundfarben Rot, Grün und Blau des RGB-Farbmodells entsprechend dem in Figur 3 schematisch dargestellten lokalen Beleuchtungsmodell nach der Formel:

$$c = e_{cm} + a_{cm} \cdot a_{cs} + \sum_{i=0}^{n-1} (att_i)(spot_i)\left[a_{cm} \cdot a_{cli} + \left(\bar{n} \cdot \bar{l}_i\right)d_{cm} \cdot d_{cli} + \left(\bar{r}_i \cdot \bar{e}\right)^{s_{rm}} s_{cm} \cdot s_{cli}\right]$$

mit

$$att_i = \frac{1}{k_{0i} + k_{1i}\,\|\vec{l_i}\| + k_{2i}\,\|\vec{l_i}\|^2}$$

(Entfernungsabschwächung)

$$spot_i = \begin{cases} -\left(\vec{l_i} \cdot \vec{s}_{dli}\right)^{s_{rli}} \\ 0 \end{cases}$$

Rasterelement innerhalb des Cutoff-Winkels $c_{rli}$ sonst

(Spotlight-Abschwächung)

| | |
|---|---|
| $a_{cm}$, $d_{cm}$, $s_{cm}$ | ambiente, diffuse bzw. spekulare Farbe des Materials |
| $e_{cm}$ | emissive Farbe des Materials |
| $s_{rm}$ | spekularer Exponent des Materials |
| $a_{cli}$, $d_{cli}$, $s_{cli}$ | ambiente, diffuse bzw. spekulare Farbe von Lichtquelle $i$ |
| $P_{pli}$ | Position von Lichtquelle $i$ |
| $s_{dli}$ | Hauptabstrahlrichtung von Lichtquelle $i$ |
| $s_{rli}$ | Spotlight-Exponent von Lichtquelle $i$ |
| $c_{rli}$ | Spotlight-Cutoff-Winkel von Lichtquelle $i$ |
| $k_{0i}$, $k_{1i}$, $k_{2i}$ | konstante, lineare und quadratische Entfernungsabschwächung von Lichtquelle $i$ |
| $a_{cs}$ | ambiente Farbe der Szene |

Am Ausgang der Baugruppe 7 erscheint somit für jeden der drei Eckpunkte jeweils ein Farbwert F1, F2 bzw. F3, der die Intensität der drei Grundfarben für diesen Eckpunkt wiedergibt.

Die entsprechenden Farbwerte für die innerhalb der Polygonfläche liegenden Rasterelemente werden dann in Abhängigkeit von der Position des jeweiligen Rasterelements innerhalb der Polygonfläche aus den Farbwerten F1, F2, F3 an den Eckpunkten interpoliert. Hierzu ist eine weitere Baugruppe 8 vorgesehen, die zur Aufnahme der für die Eckpunkte ermittelten Farbwerte F1, F2, F3 mit der Baugruppe 7 verbunden ist und die Koordinaten des jeweiligen Rasterelements von der Baugruppe 4 aufnimmt. Die Baugruppe 8 gibt also für jedes der Rasterelemente einen Farbwert F' aus, der sich durch Interpolation der für die Eckpunkte entsprechend dem lokalen Beleuchtungsmodell ermittelten Farbwerte ergibt.

Darüber hinaus ermöglicht die dargestellte erfindungsgemäße Recheneinheit 1 die Simulation einer Oberflächenstruktur der Polygonfläche, ohne die Polygonfläche entsprechend verkleinern zu müssen. Die gewünschte Oberflächenstruktur wird hierbei durch eine zwei-dimensionale Speichermatrix 9 definiert, die in jedem Speicherplatz einen Neigungswert enthält, der die Neigung der lokalen Oberflächennormale durch die Oberflächenstruktur bestimmt und somit quasi ein Abbild der zu simulierenden Oberflächenstruktur enthält.

Der vom übergeordneten Grafiksystem gelieferte Parametersatz wird hierzu einer weiteren Baugruppe 17 zugeführt, die die Speichermatrixadressen T1 = (u1, v1), T2 = (u2, v2), T3 = (u3, v3) der drei Eckpunkte der dreieckigen Polygonfläche berechnet.

Jedem Rasterelement der Polygonfläche wird durch eine Adressierungseinheit 10 ein Speicherplatz der Speichermatrix 9 und damit ein Neigungswert zugeordnet, wobei wichtig ist, daß die Zuordnung der einzelnen Rasterelemente zu den zugehörigen Speicherplätzen der Speichermatrix 9 unabhängig von einer eventuellen Positionsänderung der Polygonfläche ist, da die zu simulierende Oberflächenstruktur bei einer Positionsänderung der Polygonfläche andernfalls auf der Polygonfläche wandern würde.

Die Adressierungseinheit 10 erhält deshalb sowohl die Koordinaten X, Y, Z des jeweiligen Rasterelements als auch die Texturadressen T1, T2, T3 der drei Eckpunkte der Polygonfläche und berechnet daraus Adreßwerte u, v für die Adressierung der zwei-dimensionalen Speichermatrix 9.

Der für das jeweilige Rasterelement aus der Speichermatrix 9 ausgelesene Neigungswert wird dann einer Baugruppe 11 zugeführt, die daraus in Verbindung mit dem oben erwähnten Halbvektor an dieser Stelle einen weiteren lokalen Farbwert F" für das jeweilige Rasterelement berechnet, der die zu simulierende Oberflächenstruktur wiedergibt.

Der durch Gouraud-Interpolation ermittelte Farbwert F' wird dann zusammen mit dem entsprechend der Oberflächenstruktur berechneten Farbwert F" einer weiteren Baugruppe 12 zugeführt, die durch Mischung der beiden Farbwerte F', F" den endgültigen Farbwert $F_{MIX}$ bestimmt, der nachfolgend in einen Bildschirmspeicher 13 geschrieben wird.

Zur Darstellung auf einem Bildschirm 14 ist es weiterhin erforderlich, die dreidimensionalen Koordinaten X, Y, Z der einzelnen Rasterelemente in ein zweidimensionales Bildschirm-Koordinatensystem umzurechnen, das die Position des jeweiligen Rasterelements auf dem Bildschirm 14 angibt. Die von der Baugruppe 4 berechneten Koordinaten X, Y, Z werden deshalb einer auch als Z-Filter bezeichneten Baugruppe 15 zugeführt, die nach Z-Werten sichtbare und unsichtbare Punkte aussortiert.

Nach der Berechnung der Farbwerte sämtlicher Rasterelemente aller Polygonflächen enthält der Bildschirmspeicher 13 ein perspektivisches Bild der virtuellen räumlichen Szene. Die Wiedergabe dieses Bildes erfolgt dann durch eine eingangsseitig mit dem Bildschirmspeicher 13 verbundene Bildschirmtreiberschaltung 16 und den Bildschirm 14.

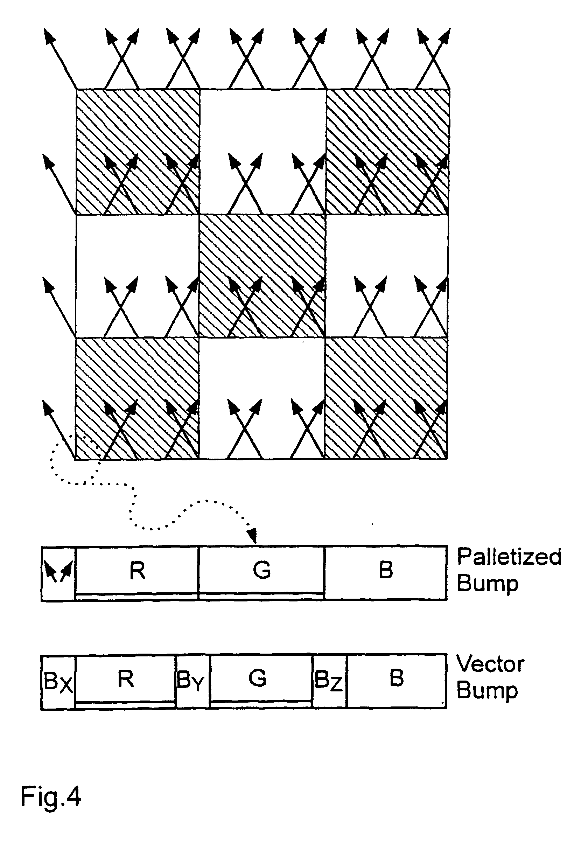

Figur 4 zeigt ein Schema zur Erläuterung einer besonderen Variante der Erfindung, bei der die Speichermatrix (Bump-Map) in jedem Speicherplatz direkt die lokale Flächennormale des jeweiligen Rasterelements enthält, so daß eine Phong-Schattierung möglich ist, ohne die lokale Flächennormale in den einzelnen Rasterelementen aufwendig interpolieren zu müssen. Zur Bestimmung der lokalen Flächennormale ist also lediglich ein Lesezugriff auf die Speichermatrix erforderlich, wobei die Adressierung der Speichermatrix in Abhängigkeit von der Position des jeweiligen Rasterelements innerhalb der Polygonfläche erfolgt.

**Patentansprüche**

1. Verfahren zur Darstellung eines computermodellierten Objekts, das durch eine Vielzahl von aneinander angrenzenden Polygonflächen nachgebildet wird,
   wobei die räumliche Lage der einzelnen Polygonflächen jeweils durch einen ersten Parametersatz und die Perspektive des Betrachters durch einen zweiten Parametersatz (E) sowie die räumliche Lage und die Abstrahleigenschaften mindestens einer Lichtquelle durch einen Beleuchtungsdatensatz (L) vorgegeben sind,
   mit folgenden Schritten für die einzelnen Polygonflächen:

   - Berechnung mindestens einer Flächennormale der Polygonfläche, insbesondere der Flächennormalen an deren Eckpunkten (N1, N2, N3), aus dem ersten Parametersatz,

   - Berechnung mindestens eines Farbwerts für die Polygonfläche, insbesondere der Farbwerte an deren Eckpunkten, (F1, F2, F3) in Abhängigkeit von der jeweiligen berechneten Flächennormale entsprechend einem lokalen Beleuchtungsmodell,

   - Aufteilung der Polygonfläche in eine Vielzahl von Rasterelementen und Berechnung jeweils eines die räumliche Lage des jeweiligen Rasterelements wiedergebenden Koordinatensatzes (X, Y, Z) aus dem ersten Parametersatz,

   - Interpolation eines ersten lokalen Farbwerts (F') für die einzelnen Rasterelemente in Abhängigkeit von dem jeweiligen Koordinatensatz (X, Y, Z) und den berechneten Farbwerten der Polygonfläche,

   **gekennzeichnet durch** die zusätzlichen Schritte:

   - Adressierung einer ersten Speichermatrix (9) individuell für die einzelnen Rasterelemente in Abhängigkeit von dem jeweiligen Koordinatensatz (X, Y, Z), wobei die erste Speichermatrix (9) zur Simulation einer Oberflächenstruktur der Polygonfläche in jedem Speicherplatz einen Neigungswert enthält, der die Neigung der lokalen Flächennormale aufgrund der Oberflächenstruktur bestimmt,

   - Auslesen des Neigungswerts für das jeweilige Rasterelement aus dem adressierten Speicherplatz der ersten Speichermatrix (9),

   - Berechnung eines den Einfluß der Oberflächenstruktur auf den Bildeindruck berücksichtigenden zweiten lokalen Farbwerts (F'') in Abhängigkeit von dem ausgelesenen Neigungswert,

   - Berechnung eines zur Bilddarstellung dienenden dritten lokalen Farbwerts ($F_{MIX}$) für die einzelnen Rasterelemente aus dem ersten lokalen Farbwert (F') und dem zweiten lokalen Farbwert (F'').

2. Verfahren nach Anspruch 1, **dadurch gekennzeichnet,**
   **daß** aus dem aus der ersten Speichermatrix (9) ausgelesenen Neigungswert und den berechneten Flächennormalen (N1, N2, N3) eine lokale geneigte Flächennormale berechnet wird,
**daß** das Skalarprodukt der geneigten lokalen Flächennormale und eines die Beleuchtungssituation darstellenden, in ein Bump-Koordinatensystem transformierten Vektors, insbesondere des Halbvektors, berechnet wird und
**daß** der zweite lokale Farbwert (F") in Abhängigkeit von dem Skalarprodukt berechnet wird.

3. Verfahren nach einem der vorhergehenden Ansprüche, **dadurch gekennzeichnet, daß** die Berechnung der Farbwerte (F1, F2, F3) entsprechend dem lokalen Beleuchtungsmodell für die Eckpunkte (P1, P2, P3) der jeweiligen Polygonfläche erfolgt.

4. Verfahren nach Anspruch 3, **dadurch gekennzeichnet, daß** der erste lokale Farbwert (F') für die einzelnen Rasterelemente jeweils aus den für die Eckpunkte (P1, P2, P3) der Polygonfläche entsprechend dem lokalen Beleuchtungsmodell berechneten Farbwerten (F1, F2, F3) zwei-dimensional interpoliert wird.

5. Verfahren nach einem der vorhergehenden Ansprüche, **dadurch gekennzeichnet,**
**daß** individuell für jedes Rasterelement in Abhängigkeit von dem Koordinatensatz des jeweiligen Rasterelements eine zweite Speichermatrix adressiert wird, wobei die zweite Speichermatrix zur Textursimulation in jedem Speicherplatz einen vorgegebenen Texturwert enthält,
**daß** der dritte lokale Farbwert ($F_{MIX}$) in Abhängigkeit von dem aus der zweiten Speichermatrix ausgelesenen Texturwert berechnet wird.

6. Vorrichtung zur Durchführung des Verfahrens nach einem der vorhergehenden Ansprüche, mit
einem Eingang zur Aufnahme des ersten Parametersatzes und des zweiten Parametersatzes (E) und des Beleuchtungsdatensatzes (L),
einer ersten Baugruppe (5) zur Berechnung mindestens einer Flächennormale der Polygonfläche, insbesondere der Normalen an den Eckpunkten, (N1, N2, N3) aus dem ersten Parametersatz,
einer zweiten Baugruppe (7) zur Berechnung mindestens eines globalen Farbwerts, insbesondere der Farbwerte an den Eckpunkten (F1, F2, F3) für die Polygonfläche in Abhängigkeit von der jeweiligen berechneten Flächennormale (N1, N2, N3) entsprechend einem lokalen Beleuchtungsmodell,
einer dritten Baugruppe (3, 4) zur Aufteilung der Polygonfläche in eine Vielzahl von Rasterelementen und zur Berechnung jeweils eines die räumliche Lage des jeweiligen Rasterelements wiedergebenden Koordinatensatzes (X, Y, Z),
einer vierten Baugruppe (8) zur Interpolation eines ersten lokalen Farbwerts (F') für die einzelnen Rasterelemente aus dem jeweiligen Koordinatensatz (X, Y, Z) und den berechneten Farbwerten der Polygonfläche,
**gekennzeichnet durch**
eine erste Speichermatrix (9) zur Simulation einer Oberflächenstruktur, wobei jeder Speicherplatz der ersten Speichermatrix (9) einen Neigungswert enthält, der die Neigung der lokalen Flächennormale aufgrund der Oberflächenstruktur bestimmt,
eine Adressierungseinheit (10) zur Adressierung der ersten Speichermatrix (9) individuell für jedes Rasterelement in Abhängigkeit von dem Koordinatensatz (X, Y, Z) des jeweiligen Rasterelements,
einer fünften Baugruppe (11) zur Berechnung eines den Einfluß der Oberflächenstruktur berücksichtigenden zweiten lokalen Farbwerts (F") in Abhängigkeit von dem aus der ersten Speichermatrix (9) ausgelesenen Neigungswert,
einer sechsten Baugruppe (12) zur Mischung des ersten lokalen Farbwerts (F') und des zweiten lokalen Farbwerts (F") zu einem dritten lokalen Farbwert ($F_{MIX}$) zur nachfolgenden Ansteuerung eines Bildschirms (14).

7. Vorrichtung nach Anspruch 6, **dadurch gekennzeichnet, daß** die erste Speichermatrix (9) zur Definition der Oberflächenstruktur in jedem Speicherplatz jeweils einen normierten Vektor oder eine Rotationsmatrix enthält.

8. Vorrichtung nach Anspruch 6 oder 7, **dadurch gekennzeichnet, daß** zur Textursimulation eine zweite Speichermatrix vorgesehen ist, die zur Adressierung individuell für jedes Rasterelement eingangsseitig mit der Adressierungseinheit (10) verbunden ist und in jedem Speicherplatz einen Texturwert für das zugehörige Rasterelement enthält.

**Claims**

1. A method of representing a computer-modelled object which is simulated by a plurality of mutually adjacent polygonal surfaces,
wherein the spatial position of the individual polygonal surfaces are respectively predetermined by a first parameter set and the perspective of the viewer is predetermined by a second parameter set (E) and the spatial position and the radiation properties of at least one light source are predetermined by an illumination data set, comprising the following steps for the individual polygonal surfaces:

- calculating at least one surface normal of the polygonal surface, in particular the surface normals at the corner points (N1, N2, N3) thereof, from the first parameter set,
- calculating at least one colour value for the polygonal surface, in particular the colour values at the corner points (F1, F2, F3) thereof, in dependence on the respective calculated surface normal, corresponding to a local illumination model,
- dividing the polygonal surface into a plurality of raster elements and calculating a respective co-ordinate set (X, Y, Z) from the first parameter set, the respective co-ordinate set representing the spatial position of the respective raster element, and
- interpolating a first local colour value (F') for the individual raster elements in dependence on the respective co-ordinate set (X, Y, Z) and the calculated colour values of the polygonal surface,

  **characterised by** the additional steps:

- addressing a first storage matrix (9) individually for the individual raster elements in dependence on the respective co-ordinate set (X, Y, Z), wherein the first storage matrix (9) for the simulation of a surface structure of the polygonal surface includes in each storage location an inclination value which determines the inclination of the local surface normal by virtue of the surface structure,
- reading out the inclination value for the respective raster element from the addressed storage location of the first storage matrix (9),
- calculating a second local colour value (F") in dependence on the read-out inclination value, said second local colour value taking into account the influence of the surface structure on the image impression, and
- calculating a third local colour value ($F_{MIX}$) for the individual raster elements from the first local colour value (F') and the second local colour value (F"), said third local colour value serving for image representation.

2. A method according to claim 1 **characterised in that**
   a local inclined surface normal is calculated from the inclination value read out of the first storage matrix (9) and the calculated surface normals (N1, N2, N3),
   the scalar product of the inclined local surface normal and a vector representing the illumination situation and transformed into a bump-coordinate system, in particular the half-vector, is calculated, and
   the second local colour value (F") is calculated in dependence on the scalar product.

3. A method according to one of the preceding claims **characterised in that** calculation of the colour values (F1, F2, F3) is effected according to the local illumination model for the corner points (P1, P2, P3) of the respective polygonal surface.

4. A method according to claim 3 **characterised in that** the first local colour value (F') for the individual raster elements is respectively interpolated in two-dimensional manner from the colour values (F1, F2, F3) calculated for the corner points (P1, P2, P3) of the polygonal surface corresponding to the local illumination model.

5. A method according to one of the preceding claims **characterised in that**
   a second storage matrix is addressed individually for each raster element in dependence on the co-ordinate set of the respective raster element, wherein the second storage matrix includes a predetermined texture value for texture simulation in each storage location, and
   the third local colour value ($F_{MIX}$) is calculated in dependence on the texture value read out of the second storage matrix.

6. Apparatus for carrying out the method according to one of the preceding claims comprising
   an input for receiving the first parameter set and the second parameter set (E) and the illumination data set (L),
   a first assembly (5) for calculating at least one surface normal of the polygonal surface, in particular the normals at the corner points (N1, N2, N3), from the first parameter set,
   a second assembly (7) for calculating at least one global colour value, in particular the colour values at the corner points (F1, F2, F3) for the polygonal surface in dependence on the respective calculated surface normal (N1, N2, N3) corresponding to a local illumination model,
   a third assembly (3, 4) for dividing the polygonal surface into a plurality of raster elements and for calculating a respective co-ordinate set (X, Y, Z) representing the spatial position of the respective raster element, and

a fourth assembly (8) for interpolating a first local colour value (F') for the individual raster elements from the respective co-ordinate set (X, Y, Z) and the calculated colour values of the polygonal surface,

**characterised by**

a first storage matrix (9) for the simulation of a surface structure, wherein each storage location of the first storage matrix (9) contains an inclination value which determines the inclination of the local surface normal by virtue of the surface structure,

an addressing unit (10) for addressing the first storage matrix (9) individually for each raster element in dependence on the co-ordinate set (X, Y, Z) of the respective raster element,

a fifth assembly (11) for calculating a second local colour value (F''), which takes account of the influence of the surface structure, in dependence on the inclination value read out of the first storage matrix (9), and

a sixth assembly (12) for mixing the first local colour value (F') and the second local colour value (F'') to form a third local colour value ($F_{MIX}$) for subsequent actuation of a screen (14).

**7.** Apparatus according to claim 6 **characterised in that** the first storage matrix (9) contains in each storage location a respective standardised vector or a rotation matrix for defining the surface structure.

**8.** Apparatus according to claim 6 or claim 7 **characterised in that** for texture simulation there is provided a second storage matrix which is connected at the input side to the addressing unit (10) for the addressing operation individually for each raster element and in each storage location contains a texture value for the associated raster element.

## Revendications

**1.** Procédé pour représenter un objet modélisé par ordinateur, qui est simulé par une multiplicité de surfaces polygonales continues,

selon lequel la position spatiale des différentes surfaces polygonales est prédéterminée respectivement par un premier ensemble de paramètres et la perspective de l'observateur est prédéterminée par un second ensemble de paramètres (E), et la position spatiale et les caractéristiques de rayonnement d'au moins une source de lumière sont prédéterminées par un ensemble de données d'éclairement (L),

comportant les étapes suivantes pour les différentes surfaces polygonales:

- calcul d'au moins une normale à la surface polygonale, notamment de la normale à la surface au niveau de ses sommets (N1, N2, N3), à partir du premier ensemble de paramètres,
- calcul d'au moins un paramètre pour la surface polygonale, notamment des valeurs de couleur au niveau de ses sommets (F1, F2, F3) en fonction de la normale respective calculée à la surface conformément à un modèle d'éclairement local,
- division de la surface polygonale en une multiplicité d'éléments de réseau et calcul respectivement d'un ensemble de coordonnées (X, Y, Z) reproduisant la position spatiale de l'élément de réseau respectif, à partir du premier ensemble de paramètres,
- interpolation d'une première valeur de couleur locale (F') pour les différents éléments de réseau en fonction de l'ensemble respectif de coordonnées (X, Y, Z) et des valeurs de couleur calculées de la surface polygonale,

**caractérisé par** les étapes supplémentaires:

- adressage d'une première matrice de mémoire (9) individuellement pour les différents éléments de réseau en fonction de l'ensemble respectif de coordonnées (X, Y, Z), la première matrice de mémoire (9) contenant dans chaque emplacement de mémoire, pour la simulation d'une structure superficielle de la surface polygonale, une valeur d'inclinaison, qui déterminer l'inclinaison de la normale locale à la surface sur la base de la structure superficielle,
- lecture de la valeur d'inclinaison pour l'élément de réseau respectif à partir de l'emplacement de mémoire adressé de la première matrice de mémoire (9),
- calcul d'une seconde valeur de couleur locale (F'') qui prend en compte l'influence de la structure superficielle sur l'impression d'image, en fonction de la valeur d'inclinaison lue,
- calcul d'une troisième valeur de couleur locale ($F_{MIX}$) utilisée pour la représentation de l'image, pour les différents éléments de réseau à partir de la première valeur de couleur locale (F) et de la seconde valeur de couleur locale (F'').

**2.** Procédé selon la revendication 1, **caractérisé en ce**
**qu'**on calcule une normale locale inclinée à la surface à partir de la valeur d'inclinaison lue dans la première matrice de mémoire (9) et à partir des normales calculées à la surface (N1, N2, N3),
**qu'**on calcule le produit scalaire de la normale locale inclinée à la surface et d'un vecteur, qui représente la situation d'éclairement et est transformé en un système de coordonnées d'ombrage, notamment du demi-vecteur, et
**qu'**on calcule la seconde valeur de couleur locale (F") en fonction du produit scalaire.

**3.** Procédé selon l'une des revendications précédentes, **caractérisé en ce que** le calcul des valeurs de couleur (F1, F2, F3) est effectué en fonction du module local d'éclairement pour les sommets (P1, P2, P3) de la surface polygonale respective.

**4.** Procédé selon la revendication 3, **caractérisé en ce qu'**on interpole d'une manière bidimensionnelle la première valeur de couleur locale (F") pour les différents éléments de trame respectivement à partir des valeurs de couleurs (F1, F2, F3) calculées pour les sommets (P1, P2, P3) de la surface polygonale en fonction du modèle local d'éclairement.

**5.** Procédé selon l'une des revendications précédentes, **caractérisé en ce**
**qu'**on adresse individuellement une seconde matrice de mémoire pour chaque élément de réseau en fonction de l'ensemble de coordonnées de l'élément de réseau respectif, la seconde matrice de mémoire contenant pour chaque emplacement de mémoire une valeur de texture prédéterminée pour la simulation de texture,
**qu'**on calcule la troisième valeur de couleur locale (F$_{MIX}$) en fonction de la valeur de texture lue à partir de la seconde matrice de mémoire.

**6.** Dispositif pour la mise en oeuvre du procédé selon l'une des revendications précédentes, comportant
une entrée pour recevoir le premier ensemble de paramètres et le second ensemble de paramètres (E) et l'ensemble des données d'éclairement (L),
un premier module (5) pour calculer au moins une surface à la normale de la surface polygonale, notamment des normales (L1, L2, L3) au niveau des sommets, à partir du premier ensemble de paramètres,
un second module (7) pour le calcul d'au moins une valeur de couleur globale, notamment des valeurs de couleurs (F1, F2, F3) au niveau des sommets pour la surface polygonale en fonction de la normale respective calculée à la surface (N1, N2, N3) en fonction d'un modèle local d'éclairement,
un troisième module (3, 4) pour diviser la surface polygonale en une multiplicité d'éléments de réseau et pour calculer respectivement un ensemble de coordonnées (X, Y, Z) reproduisant la position spatiale de l'élément de trame respectif,
un quatrième module (8) pour l'interpolation d'une première valeur de couleur locale (F') pour les différents éléments de réseau à partir de l'ensemble de coordonnées respectives (X, Y, Z) et les valeurs de couleurs calculées de la surface polygonale,
**caractérisé par**
une première matrice de mémoire (9) pour simuler une structure superficielle, chaque emplacement de mémoire de la première matrice de mémoire (9) contenant une valeur d'inclinaison, qui détermine l'inclinaison de la normale locale à la surface sur la base de la structure superficielle,
une unité d'adressage (10) pour l'adressage de la première matrice de mémoire (9) individuellement pour chaque élément de réseau en fonction de l'ensemble de coordonnées (X, Y, Z) de l'élément de réseau respectif,
un cinquième module (11) pour le calcul d'une seconde valeur de couleur locale (F"), qui prend en compte l'influence de la structure superficielle, en fonction de la valeur d'inclinaison lue à partir de la première matrice de mémoire (9),
un sixième module (12) pour mélanger la première valeur de couleur locale (F') et la seconde valeur de couleur locale (F") pour former une troisième valeur de couleur locale (F$_{MIX}$) pour la commande ultérieure d'un écran (14).

**7.** Dispositif selon la revendication 6, **caractérisé en ce que** la première matrice de mémoire (9) pour la définition de la structure superficielle, contient, en chaque emplacement de mémoire, respectivement un vecteur normalisé ou une matrice de rotation.

**8.** Dispositif selon la revendication 6 ou 7, **caractérisé en ce que** pour la simulation de texture, il est prévu une seconde matrice de mémoire, qui, pour l'adressage, est reliée individuellement, pour chaque élément de réseau, côté entrée, à l'unité d'adressage (10) et contient, en chaque emplacement de mémoire, une valeur de texture de l'élément de réseau associé.

Fig.1

$P_{START}, n_1, n_2, \Delta lu, \Delta ru, \Delta ld, \Delta rd, \Delta zy, \Delta zx, N_{START}, \Delta N_X, \Delta N_Y, u_{START}, v_{START}, \Delta ux, \Delta vx, \Delta uy, \Delta vy$

Fig.2a

Fig.2b

Fig.3

Palletized Bump

Vector Bump

Fig.4